# EUROPEAN PATENT APPLICATION

(11) **EP 4 317 298 A1**
(43) Date of publication of application: **07.02.2024**
(21) Application number: 22774546.0
(22) Date of filing: 07.01.2022
(51) Int. Cl.: C08L 23/10, C08L 23/18, C08L 53/00, C08J 5/18

(54) **OLEFIN-BASED POLYMER COMPOSITION AND FILM**

(30) Priority: 25.03.2021 JP 2021052136
(71) Applicant: Sumitomo Chemical Company Limited, Tokyo 103-6020 (JP)
(72) Inventor: ONISHI, Kensuke, Ichihara-shi, Chiba 299-0195 (JP); TOYODA, Hiroshi, Ichihara-shi, Chiba 299-0195 (JP)
(74) Representative: Vossius & Partner Patentanwälte Rechtsanwälte mbB
(86) International application number: PCT/JP2022/000347
(87) International publication number: WO 2022/201741

(57) **Abstract**

An object of the present invention is to provide an olefin-based polymer composition capable of forming a film that can be heat-sealed at a relatively low temperature and having good anti-blocking property in the film, and a film containing the olefin-based polymer composition. The olefin-based polymer composition according to the present invention contains an olefin-based polymer and satisfies the following requirements (1) to (3): requirement (1): in temperature gradient interaction chromatography of the olefin-based polymer composition measured using a gel permeation chromatograph equipped with a graphite-packed column, an elution amount measured at 70°C to 95°C is 10.0 mass% to 28.0 mass% based on 100 mass% of an elution amount measured up to 160°C, requirement (2): an amount of a cold xylene soluble component is 20.0 mass% or less, and requirement (3): a melting point of the olefin-based polymer composition is 150°C or lower.

## Description

### TECHNICAL FIELD

The present invention relates to an olefin-based polymer composition and a film containing the olefin-based polymer composition.

### BACKGROUND ART

As a film used for various packaging materials, a multilayer film including a film substrate and a sealant film laminated on the film substrate is widely known. Specifically, there is known a film in which various biaxially stretched films are used as a film substrate, and a polypropylene-based biaxially stretched film or a cast film is used as a sealant film. A film having such a configuration is widely used as a material for forming various packaging pouches. When a packaging pouch is formed using such a film (pouch-making processing is performed), the end portions of the sealant films are superimposed such that the films face each other, and the end portions are heat-sealed by heating, to form the packaging pouch. Thereby, a sealed packaging pouch can be formed.

In recent years, a material capable of forming a sealant film that can be heat-sealed at a relatively low temperature has been demanded since the pouch-making speed has been increased and the heating time at the time of heat-sealing has been shortened. For example, Patent Document 1 discloses that a sealant film made of a resin composition containing a propylene-based polymer and a specific ethylene-α-olefin copolymer is relatively excellent in low-temperature sealability.

### PRIOR ART DOCUMENTS

### PATENT DOCUMENT

Patent Document 1: JP-A-2018-161840

### SUMMARY OF THE INVENTION

### PROBLEMS TO BE SOLVED BY THE INVENTION

However, when the sealant film that can be heat-sealed at a relatively low temperature as described above is wound into a roll, or a plurality of such sealant films are stacked as one sheet, so-called blocking may occur in which the films are hardly peeled off from each other or the slidability between the films is deteriorated. When such blocking occurs, it becomes difficult to smoothly process the film thereafter.

The present invention has been made in view of such circumstances, and an object thereof is to provide an olefin-based polymer composition capable of forming a film that can be heat-sealed at a relatively low temperature and having good anti-blocking property in the film, and a film containing the olefin-based polymer composition.

### MEANS FOR SOLVING THE PROBLEMS

The olefin-based polymer composition according to the present invention contains an olefin-based polymer and satisfies the following requirements (1) to (3):
requirement (1):
   in temperature gradient interaction chromatography of the olefin-based polymer composition measured using a gel permeation chromatograph equipped with a graphite-packed column, an elution amount measured at 70°C to 95°C is 10.0 mass% to 28.0 mass% based on 100 mass% of an elution amount measured up to 160°C,
requirement (2):
   an amount of a cold xylene soluble component is 20.0 mass% or less, and
requirement (3):
   a melting point of the olefin-based polymer composition is 150°C or lower.

The film according to the present invention contains the olefin-based polymer composition.

### EFFECT OF THE INVENTION

According to the present invention, it is possible to provide an olefin-based polymer composition capable of forming a film that can be heat-sealed at a relatively low temperature and having good anti-blocking property in the film, and a film containing the olefin-based polymer composition.

### MODE FOR CARRYING OUT THE INVENTION

Hereinafter, the olefin-based polymer composition and the film according to an embodiment of the present invention will be described, but the present invention is not limited to the following embodiment.

The olefin-based polymer composition according to the present embodiment contains an olefin-based polymer, and preferably contains at least two olefin-based polymers. Examples of the olefin-based polymer include propylene-based polymers, ethylene-based polymers, and α-olefin-based polymers.

In the present specification, the propylene-based polymer is a propylene homopolymer or a propylene-based copolymer containing 50 mass% or more of a monomer unit derived from propylene. The ethylene-based polymer is an ethylene homopolymer or an ethylene-based copolymer containing 50 mass% or more of a monomer unit derived from ethylene. The α-olefin-based polymer is an α-olefin homopolymer or an α-olefin-based copolymer containing 50 mass% or more of a monomer unit derived from α-olefin.

The olefin-based polymer composition according to the present embodiment satisfies the requirement (1). That is, in temperature gradient interaction chromatography of the olefin-based polymer composition measured using a gel permeation chromatograph equipped with a graphite-packed column, the elution amount measured at 70°C to 95°C is 10.0 mass% to 28.0 mass% based on 100 mass% of the elution amount measured up to 160°C. A film that can be heat-sealed at a relatively low temperature can be formed by setting the elution amount of the olefin-based polymer composition measured at 70°C to 95°C within the above range. The elution amount of the olefin-based polymer composition measured at 70°C to 95°C is preferably 15.0 mass% to 28.0 mass%, and more preferably 20.0 mass% to 28.0 mass%.

In the requirement (1), the elution amount of the olefin-based polymer composition at 70°C to 75°C is preferably 3.0 mass% to 7.0 mass%, and more preferably 3.0 mass% to 6.2 mass%. The elution amount of the olefin-based polymer composition at 90°C to 95°C is preferably 2.0 mass% to 18.0 mass%, and more preferably 4.0 mass% to 10.0 mass%. As one aspect of the olefin-based polymer composition according to the present embodiment, the elution amount of the olefin-based polymer composition at 70°C to 75°C is preferably 3.0 mass% to 7.0 mass%, and the elution amount at 90°C to 95°C is preferably 2.0 mass% to 18.0 mass%.

The elution amount of the olefin-based polymer composition can be adjusted to the above range by selecting the type of the olefin-based polymer contained in the olefin-based polymer composition and controlling the composition ratio thereof to a predetermined range. The elution amount of the olefin-based polymer composition in a predetermined temperature range can be determined by the method described in Examples described later.

The olefin-based polymer composition according to the present embodiment satisfies the requirement (2). That is, the amount of the cold xylene soluble component is 20.0 mass% or less. A film having good anti-blocking property can be formed by setting the amount of the cold xylene soluble component of the olefin-based polymer composition within the above range. The amount of the cold xylene soluble component of the olefin-based polymer composition is preferably 8.0 mass% to 20.0 mass%, and more preferably 8.0 mass% to 16.0 mass%.

The amount of the cold xylene soluble component of the olefin-based polymer composition can be adjusted to the above range by selecting the type of the olefin-based polymer contained in the olefin-based polymer composition and controlling the composition ratio thereof to a predetermined range. The amount of the cold xylene soluble component can be determined by the method described in Examples described later.

The olefin-based polymer composition according to the present embodiment satisfies the requirement (3). That is, the melting point of the olefin-based polymer composition is 150°C or lower. A film that can be heat-sealed at a relatively low temperature can be formed by setting the melting point of the olefin-based polymer composition within the above range. The melting point of the olefin-based polymer composition is preferably 110°C to 150°C, and more preferably 110°C to 135°C.

The melting point of the olefin-based polymer composition can be adjusted to the above range by selecting the type of the olefin-based polymer contained in the olefin-based polymer composition and controlling the composition ratio thereof to a predetermined range. The melting point of the olefin-based polymer composition can be determined by the method described in Examples described later.

From the viewpoint of improving the low-temperature heat-sealability and the anti-blocking property of the film, as one aspect, the olefin-based polymer composition according to the present embodiment preferably contains: a propylene-ethylene copolymer (A) containing a monomer unit derived from propylene and a monomer unit derived from ethylene; a propylene-α-olefin copolymer (B) containing a monomer unit derived from propylene and a monomer unit derived from an α-olefin having 4 to 12 carbon atoms; and at least one polymer (C) selected from the group consisting of an ethylene-α-olefin copolymer containing a monomer unit derived from ethylene and a monomer unit derived from an α-olefin having 4 to 12 carbon atoms, and an α-olefin-based polymer containing 50 mass% or more of a monomer unit derived from an α-olefin having 4 to 12 carbon atoms.

The propylene-ethylene copolymer (A) is a propylene-based copolymer containing 50 mass% or more of a monomer unit derived from propylene. The content of the monomer unit derived from propylene in the propylene-ethylene copolymer (A) is preferably 90 mass% to 99 mass%, and more preferably 95 mass% to 99 mass%. The content of the monomer unit derived from ethylene in the propylene-ethylene copolymer (A) is preferably 1 mass% to 10 mass%, and more preferably 1 mass% to 5 mass%.

The propylene-α-olefin copolymer (B) is a propylene-based copolymer containing 50 mass% or more of a monomer unit derived from propylene. The content of the monomer unit derived from propylene in the propylene-α-olefin copolymer (B) is preferably 70 mass% to 99 mass%, and more preferably 75 mass% to 99 mass%. The content of the monomer unit derived from an α-olefin having 4 to 12 carbon atoms in the propylene-α-olefin copolymer (B) is preferably 1 mass% to 30 mass%, and more preferably 1 mass% to 25 mass%. Examples of the α-olefin having 4 to 12 carbon atoms include 1-butene, 1-hexene, and 1-octene, and 1-butene is preferable. When the α-olefin having 4 to 12 carbon atoms is 1-butene, the propylene-α-olefin copolymer (B) preferably contains 3 mass% to 30 mass% of a monomer unit derived from 1-butene.

The olefin-based polymer composition according to the present embodiment is not limited to the composition containing the propylene-ethylene copolymer (A) and the propylene-α-olefin copolymer (B) as the propylene-based polymer, and may contain other propylene-based polymers.

In the olefin-based polymer composition, the propylene-based polymer may be used singly, or two or more propylene-based polymers may be used in combination.

The melt flow rate (MFR) of the propylene-based polymer measured at a temperature of 230°C and a load of 2.16 kg is preferably 0.001 g/10 min to 10 g/10 min, more preferably 0.01 g/10 min to 10 g/10 min, and still more preferably 0.01 g/10 min to 5 g/10 min, from the viewpoint of improving the processability of the film and lowering environmental impact.

The MFR is measured according to the method A defined in JIS K7210-1.

Examples of the method for producing the propylene-based polymer include a method of homopolymerizing propylene in the presence of a Ziegler-Natta catalyst, a metallocene catalyst, or the like, and a method of copolymerizing propylene and an olefin other than propylene. Examples of the Ziegler-Natta catalyst include catalysts used by combining a titanium-containing solid transition metal component and an organometallic component. Examples of the metallocene catalyst include catalysts used by combining a transition metal compound of Groups 4 to 6 of the periodic table having at least one cyclopentadienyl skeleton, and a cocatalyst component.

Examples of the method for polymerizing the propylene-based polymer include a method of performing polymerization in an inert solvent such as hexane, heptane, toluene, or xylene, a method of performing polymerization in liquid propylene or ethylene, a method of adding a catalyst to gaseous propylene or ethylene to perform polymerization in a gas phase state, and a method of performing polymerization by combining these methods.

As a method for polymerizing the propylene-based polymer, a method of performing a plurality of polymerization steps in multiple stages (multistage polymerization method) can be used from the viewpoint of improving productivity. The multistage polymer obtained by such a multistage polymerization method may contain at least two propylene-based polymers, or may contain one propylene-based polymer. Therefore, when the multistage polymerization method is used as the polymerization method of the propylene-based polymer, the propylene-based polymer contained in the olefin-based polymer composition according to the present embodiment may constitute a multistage polymer. In other words, the olefin-based polymer composition according to the present embodiment may contain a multistage polymer.

The multistage polymer is preferably a propylene-based multistage polymer composed of a propylene-ethylene copolymer (A) and a propylene-α-olefin copolymer (B). Such a propylene-based multistage polymer can be produced by performing a first step of polymerizing propylene and ethylene in substantially the absence of an inert solvent, to produce a propylene-ethylene copolymer (A), and then performing a second step of polymerizing propylene and an α-olefin having 4 to 12 carbon atoms in a gas phase in the presence of the propylene-ethylene copolymer (A), to produce a propylene-α-olefin copolymer (B).

The content of the propylene-ethylene copolymer (A) is preferably 1 mass% to 80 mass%, and more preferably 1 mass% to 50 mass%, based on 100 mass% of the propylene-based multistage polymer. The content of the propylene-α-olefin copolymer (B) is preferably 20 mass% to 99 mass%, and more preferably 50 mass% to 99 mass%, based on 100 mass% of the propylene-based multistage polymer.

Examples of the method for adjusting the contents of ethylene and α-olefin in the propylene-ethylene copolymer (A) and the propylene-α-olefin copolymer (B) include a method of adding appropriate amounts of a molecular weight modifier such as hydrogen gas or a metal compound, and ethylene or α-olefin in each step during polymerization, and a method of adjusting the temperature, pressure, and the like during polymerization.

The production ratio between the propylene-ethylene copolymer (A) and the propylene-α-olefin copolymer (B) can be controlled by the polymerization time, the size of the polymerization tank, the retention amount of the polymer in the polymerization tank, the polymerization temperature, the polymerization pressure, and the like in the first step and the second step. If necessary, drying may be performed at a temperature equal to or lower than a temperature at which polypropylene is melted in order to remove a residual solvent for polypropylene, an ultra-low molecular weight oligomer produced as a by-product during production, and the like. Examples of the drying method include methods described in JP-A-55-75410 and JP-B-2565753.

In the polymer (C), the ethylene-α-olefin copolymer containing a monomer unit derived from ethylene and a monomer unit derived from an α-olefin having 4 to 12 carbon atoms is an ethylene-based copolymer containing 50 mass% or more of a monomer unit derived from ethylene.

The content of the monomer unit derived from ethylene in the ethylene-α-olefin copolymer is preferably 70 mass% to 95 mass%, more preferably 75 mass% to 95 mass%, and still more preferably 80 mass% to 95 mass%. In addition, the content of the monomer unit derived from α-olefin in the ethylene-α-olefin copolymer is preferably 5 mass% to 30 mass%, more preferably 5 mass% to 25 mass%, and still more preferably 5 mass% to 20 mass%.

In the polymer (C), the α-olefin-based polymer containing 50 mass% or more of a monomer unit derived from an α-olefin having 4 to 12 carbon atoms is an α-olefin homopolymer or an α-olefin-based copolymer containing 50 mass% or more of a monomer unit derived from an α-olefin having 4 to 12 carbon atoms. Examples of the monomer unit other than the α-olefin having 4 to 12 carbon atoms contained in the α-olefin-based copolymer include ethylene and propylene.

The content of the monomer unit derived from an α-olefin having 4 to 12 carbon atoms in the α-olefin-based copolymer is preferably 60 mass% to 100 mass%, and more preferably 75 mass% to 100 mass%.

Examples of the α-olefin having 4 to 12 carbon atoms in the polymer (C) include 1-butene, 1-pentene, 1-hexene, 1-heptene, 1-octene, 1-nonene, 1-decene, 4-methyl-1-pentene, and 4-methyl-1-hexene. The monomer unit derived from an α-olefin having 4 to 12 carbon atoms may be a monomer unit derived from one α-olefin or a monomer unit derived from two or more α-olefins.

The α-olefin having 4 to 12 carbon atoms is preferably 1-hexene from the viewpoint of improving the heat-seal strength.

The polymer (C) is preferably an ethylene-α-olefin copolymer containing a monomer unit derived from ethylene and a monomer unit derived from an α-olefin having 4 to 6 carbon atoms.

The polymer (C) is preferably an α-olefin homopolymer having 4 to 6 carbon atoms.

The olefin-based polymer composition according to the present embodiment is not limited to the composition containing an ethylene-α-olefin copolymer containing a monomer unit derived from ethylene and a monomer unit derived from an α-olefin having 4 to 12 carbon atoms as the ethylene-based polymer, and may contain other ethylene-based polymers. The olefin-based polymer composition according to the present embodiment is not limited to the composition containing an α-olefin-based polymer containing 50 mass% or more of a monomer unit derived from an α-olefin having 4 to 12 carbon atoms as the α-olefin-based polymer, and may contain other α-olefin-based polymers.

The density of the polymer (C) is preferably 850 kg/m³ to 950 kg/m³, more preferably 850 kg/m³ to 930 kg/m³, and still more preferably 880 kg/m³ to 930 kg/m³. When the density of the polymer (C) is 850 kg/m³ or more, a film excellent in rigidity can be obtained, and when the density of the polymer (C) is 950 kg/m³ or less, a film excellent in impact strengh at low temperature can be obtained.

The melt flow rate (MFR) of the polymer (C) measured at a temperature of 190°C and a load of 2.16 kg is preferably 0.1 g/10 min to 50 g/10 min, more preferably 0.1 g/10 min to 10 g/10 min, and still more preferably 1 g/10 min to 5 g/10 min. The MFR is measured according to the method A defined in JIS K7210-1.

The molecular weight distribution of the polymer (C) is preferably 1 or more and 5 or less, more preferably 1 or more and 4 or less, and still more preferably 2 or more and 4 or less. When the molecular weight distribution of the polymer (C) is 1 or more, the extrusion load is reduced, and the processability is improved. When the molecular weight distribution of the polymer (C) is 5 or less, a film excellent in impact strength at low temperature can be obtained. Here, the "molecular weight distribution" is the ratio (Mw/Mn) of the weight average molecular weight (Mw) to the number average molecular weight (Mn) measured by gel permeation chromatography (hereinafter, may be described as "GPC").

Examples of the method for setting the molecular weight distribution of the polymer (C) within the above range include a method of copolymerizing ethylene and an α-olefin having 4 to 12 carbon atoms, or copolymerizing an α-olefin having 4 to 12 carbon atoms and another olefin, or homopolymerizing an α-olefin using a metallocene catalyst to set the density of the polymer (C) to 850 kg/m³ to 950 kg/m³ .

The polymer (C) can be produced, for example, using a metallocene catalyst. The metallocene catalyst is, for example, an olefin polymerization catalyst prepared using a transition metal compound (hereinafter, may be referred to as "metallocene-based transition metal compound") including a group having a cyclopentadiene type anion skeleton.

Examples of the metallocene-based transition metal compound include compounds represented by the formula MLaXn-a (wherein M is a transition metal atom of Group 4 of the periodic table of elements or the lanthanoid series. L is a group having a cyclopentadiene type anion skeleton or a group containing a hetero atom, and at least one of Ls is a group having a cyclopentadiene type anion skeleton. A plurality of Ls may be crosslinked with each other. X is a halogen atom, a hydrogen atom, or a hydrocarbon group having 1 to 20 carbon atoms. n represents a valence of a transition metal atom, and a is an integer satisfying 0 < a ≤ n).

Examples of the metallocene-based transition metal compound represented by the above formula include bis(1,3-n-butylmethylcyclopentadienyl)zirconium dichloride, bis(1,3-n-propylmethylcyclopentadienyl)zirconium dichloride, bis(n-butylcyclopentadienyl)zirconium dichloride, bis(1,3-dimethylcyclopentadienyl)zirconium dichloride, bis(1,3-diethylcyclopentadienyl)zirconium dichloride, ethylene bis(indenyl)zirconium dichloride, ethylene bis(4-methyl-1-indenyl)zirconium dichloride, and ethylene bis(4,5,6,7-tetrahydro-1-indenyl)zirconium dichloride.

The metallocene-based transition metal compound is preferably used in contact with an activation cocatalyst. Examples of the activation cocatalyst include an activation cocatalyst obtained by using an alumoxane compound or an organoaluminum compound in combination with a boron compound such as tritylborate or anilinium borate. In addition, the activation cocatalyst may be used in combination with a particulate carrier containing an inorganic carrier such as SiO₂ or Al₂O₃ or an organic carrier such as a polymer of ethylene, styrene, or the like.

The olefin-based polymer composition according to the present embodiment preferably further contains an ethylene-based polymer (D) containing a monomer unit derived from ethylene and having a density of 940 kg/m³ to 970 kg/m³.

The ethylene-based polymer (D) is an ethylene homopolymer or an ethylene-based copolymer containing 50 mass% or more of a monomer unit derived from ethylene, and is preferably an ethylene homopolymer. The content of the monomer unit derived from ethylene in the ethylene-based copolymer is preferably 70 mass% to 95 mass%, more preferably 75 mass% to 95 mass%, and still more preferably 80 mass% to 95 mass%.

The density of the ethylene-based polymer (D) is 940 kg/m³ to 970 kg/m³, preferably 940 kg/m³ to 960 kg/m³, and more preferably 950 kg/m³ to 960 kg/m³ from the viewpoint of improving anti-blocking property and transparency.

The melt flow rate (MFR) of the ethylene-based polymer (D) measured at a temperature of 190°C and a load of 2.16 kg is preferably 0.1 g/10 min to 50 g/10 min, more preferably 0.1 g/10 min to 10 g/10 min, and still more preferably 1 g/10 min to 5 g/10 min. The MFR is measured according to the method A defined in JIS K7210-1.

The molecular weight distribution of the ethylene-based polymer (D) is preferably 1 or more and 5 or less, more preferably 1 or more and 4 or less, and still more preferably 2 or more and 4 or less. When the molecular weight distribution of the ethylene-based polymer (D) is 1 or more, the extrusion load is reduced, and the processability is improved. When the molecular weight distribution of the ethylene-based copolymer (D) is 5 or less, a film excellent in impact strength at low temperature can be obtained. Here, the "molecular weight distribution" is the ratio (Mw/Mn) of the weight average molecular weight (Mw) to the number average molecular weight (Mn) measured by gel permeation chromatography (hereinafter, may be described as "GPC") under the following conditions. The baseline on the chromatogram is a straight line formed by connecting a point in a stable horizontal region where the retention time is sufficiently shorter than that at which the sample elution peak appears and a point in a stable horizontal region where the retention time is sufficiently longer than that at which the solvent elution peak is observed.
Apparatus: Waters 150C, manufactured by Waters Corporation
Separation column: TOSOH TSK-GEL GMH6-HT
Measurement temperature: 140°C
Carrier: ortho-dichlorobenzene
Flow rate: 1.0 mL/min
Injection amount: 500 µL
Detector: differential refractometer
Molecular weight standard substance: standard polystyrene

Examples of the method for setting the molecular weight distribution of the ethylene-based polymer (D) within the above range include a method of homopolymerizing ethylene or copolymerizing ethylene and an olefin other than ethylene using a metallocene catalyst to set the density of the ethylene-based polymer (D) to 940 kg/m³ to 970 kg/m³.

Examples of the method for producing the ethylene-based polymer (D) include a production method using a Ziegler-Natta catalyst and employing a polymerization method such as a solution polymerization method, a slurry polymerization method, or a gas phase polymerization method. Examples of the Ziegler-Natta catalyst include a catalyst containing: an olefin polymerization solid catalyst component containing a titanium atom, a magnesium atom, or a halogen atom; and an organometallic compound. More specifically, a catalyst described in JP-A-11-322833 is exemplified.

The content of the propylene-based copolymer (A) is preferably 5 mass% to 50 mass%, and more preferably 10 mass% to 20 mass%, based on 100 mass% of the olefin-based polymer composition. The content of the propylene-based copolymer (B) is preferably 50 mass% to 95 mass%, and more preferably 50 mass% to 75 mass%, based on 100 mass% of the olefin-based polymer composition. The content of the polymer (C) is preferably 2 mass% to 40 mass%, and more preferably 5 mass% to 30 mass%, based on 100 mass% of the olefin-based polymer composition. The content of the ethylene-based polymer (D) is preferably 0.1 mass% to 10 mass%, and more preferably 1 mass% to 8 mass%, based on 100 mass% of the olefin-based polymer composition.

In the olefin-based polymer composition according to the present embodiment, additives and other resins may be added as necessary. Examples of the additive include an antioxidant, a neutralizing agent, an ultraviolet absorber, an antistatic agent, a lubricant, a nucleating agent, a pressure-sensitive adhesive, an antifogging agent, an anti-blocking agent, and a melt flow rate adjusting agent. Examples of the antioxidant include a phenol-based antioxidant, a phosphorus-based antioxidant, and a sulfur-based antioxidant, and a composite type antioxidant having a unit having both a phenol-type antioxidant mechanism and a phosphorus-type antioxidant mechanism in one molecule can also be used. Examples of other resins include elastomers such as a styrene-butadiene-styrene copolymer and a styrene-based copolymer rubber obtained by hydrogenating a styrene-isoprene-styrene copolymer.

As one aspect, the olefin-based polymer composition according to the present embodiment preferably contains a propylene-based polymer material (I) containing at least one propylene-based polymer and having a melting point higher than 120°C, and an olefin-based polymer material (II) containing at least one olefin-based polymer and having a melting point of 120°C or lower.

Examples of the propylene-based polymer material (I) include a material containing a propylene-based multistage polymer composed of a propylene-based copolymer (A) and a propylene-based copolymer (B). The melting point of the propylene-based polymer material (I) is higher than 120°C, preferably 121°C to 150°C, and more preferably 121°C to 140°C.

Examples of the olefin-based polymer material (II) include a material containing the polymer (C). The melting point of the olefin-based polymer material (II) is 120°C or lower, preferably 80°C to 120°C, and more preferably 80°C to 115°C. A case where the melting point of the olefin-based polymer material (II) is 120°C or lower includes a case where no melting point is observed.

The propylene-based polymer material (I) and the olefin-based polymer material (II) may contain the above-described additives and other resins.

The film according to the present embodiment contains the above-described olefin-based polymer composition.

The Young's modulus in MD direction of the film according to the present embodiment is preferably 400 MPa to 500 MPa, and more preferably 420 MPa to 480 MPa. The Young's modulus in MD direction of the film can be obtained by a method described in Examples described later.

The film according to the present embodiment can be formed by, for example, melt-kneading the propylene-based copolymer (A), the propylene-based copolymer (B), the polymer (C), and, as necessary, the ethylene-based polymer (D) and various additives.

The melt-kneading can be performed using a conventionally known method and apparatus. As the melt-kneading method, exemplified is a method of mixing the above materials using a mixing device such as a Henschel mixer, a ribbon blender or a tumble mixer, and then melt-kneading the materials. Alternatively, exemplified is a method of continuously supplying the above materials at a constant ratio using a quantitative feeder to obtain a homogeneous mixture, and then melt-kneading the mixture using a single screw extruder or an extruder having two or more screws, a Banbury mixer, a roll kneader, or the like.

The melt-kneading temperature is preferably 190°C to 320°C, and more preferably 210°C to 280°C.

The film thus formed can be used as a sealant film. The film according to the present embodiment may be laminated with another film such as a film substrate to form a multilayer film. Examples of the bfilm substrate include a film using a biaxially oriented polyester-based film, a biaxially oriented polyamide-based film, a biaxially oriented polyolefin-based film, or the like.

Examples of the method for producing a multilayer film include known film production methods such as a T-die method and a tubular method, and the T-die method is preferable.

As a method for laminating the films, there are a method using a feed block die in which molten resins flowing into the die from a plurality of extruders are combined in layers in the die, and a method using a multi-manifold die in which molten resins flowing into the die from a plurality of extruders are fed into separate manifolds and combined in layers immediately before the die lip.

The thickness of the film according to the present embodiment is preferably 10 µm to 100 µm, and more preferably 10 µm to 50 µm.

When the film according to the present embodiment is used as a sealant film and laminated on a film substrate to form a multilayer film, the thickness of the sealant film is preferably 10% to 30%, more preferably 15% to 30%, and still more preferably 15% to 25%, based on 100% of the thickness of the multilayer film. The thickness of the film substrate is preferably 70% to 90%, more preferably 70% to 85%, and still more preferably 75% to 85%, based on 100% of the thickness of the multilayer film. When the thicknesses of the sealant film and the film substrate are in the above range, peeling between the film substrate and the sealant film is less likely to occur, a multilayer film excellent in heat-seal strength and dropped pouch strength is obtained, and unevenness (orange peel) can be suppressed from occurring on the surface of the multilayer film when the pouch using this multilayer film is heated.

The thickness of the multilayer film is preferably 5 µm to 500 µm, and more preferably 30 µm to 150 µm.

Examples of the application of the multilayer film include packaging applications (specifically, applications for packaging heavy goods), and specific examples thereof include packaging applications such as food, fiber, and miscellaneous goods. A multilayer film for retort food packaging is preferable. The multilayer film may be used as a material for forming a packaging pouch.

The olefin-based polymer composition and the film according to the present embodiment are not limited to the above embodiment, and various modifications can be made without departing from the gist of the present invention. In addition, the configurations, methods, and the like of the embodiments other than the above may be optionally adopted and combined, and the configuration, method, and the like according to the above one embodiment may be applied to the configurations, methods, and the like according to the above other embodiments.

### EXAMPLES

Hereinafter, the present invention will be described more specifically with reference to Examples. However, the present invention is not limited to these Examples.

The measured value of each item in Examples and Comparative Examples was measured by the following method.

### (1) Temperature gradient interaction chromatography

A composition (40 mg) was added to 20 ml of ortho-dichlorobenzene containing 0.05 mass% of BHT, and then the mixture was heated and stirred at 150°C for 60 minutes to obtain a sample solution having a concentration of 2.0 mg/ml. Then, 0.5 ml of the obtained sample solution was injected into a graphite-packed column (Hypercarb column for high temperature (inner diameter: 10 mm × length 50 mm, 35005-059046) manufactured by Thermo Fisher Scientific Inc) held at 150°C in a CFC apparatus (cross fractionation chromatograph, Automated 3D analyzer CFC-2, manufactured by Polymer Char), and then held for 10 minutes. Thereafter, the sample solution was cooled to 30°C at a rate of 40°C/min and held at 30°C for 30 minutes. Thereafter, the elution amount of the sample solution at 30°C was measured by a gel permeation chromatograph (GPC) (three columns, Tosoh TSKgel GMHHR-H (S) HT, manufactured by Tosoh Corporation) equipped with an infrared spectrophotometer built in the CFC apparatus. Thereafter, the sample solution was heated to 35°C at a rate of 40°C/min and held for about 36 minutes.

Thereafter, the elution amount of the sample solution at 35°C was measured by the GPC equipped with an infrared spectrophotometer built in the CFC apparatus. Thereafter, in the same manner as in the previous operation, the sample solution was heated to 160°C at a rate of 40°C/min in increments of 5°C and held. The elution amount of the sample solution at each temperature was measured by the GPC equipped with an infrared spectrophotometer built in the CFC apparatus. In the measurement by the GPC, an ortho-dichlorobenzene solution containing 0.05 mass% of BHT was used as a mobile phase, and the flow rate of the mobile phase was 1.0 ml/min.

### (2) Cold xylene soluble component (unit: mass%)

A composition (0.1 g to 1 g) and 100 ml of xylene were mixed, and the obtained mixture was boiled and then refluxed for 30 minutes to dissolve the composition. The obtained solution was cooled with ice water for 20 minutes, and then stirred for 1 hour while maintaining at 20°C. The obtained mixture was filtered through No. 50 filter paper. The obtained filtrate was measured by liquid chromatography, and the cold xylene soluble component in the composition was measured.
Column: SHODEX GPC KF-801
Eluent: tetrahydrofuran
Column oven temperature: 40°C
Sample injection amount: 130 µL
Flow rate: 1 mL/min
Detector: differential refractometer

### (3) Melting point

Using a differential scanning calorimeter (Discovery DSC 250, manufactured by TA Instruments), about 5 mg of a composition was melted under a nitrogen gas atmosphere (nitrogen gas flow rate: 50 ml/min) at 230°C, held for 5 minutes, and cooled to 0°C at a cooling rate of 5°C/min. Next, the sample was held at 0°C for 5 minutes, heated at a heating rate of 5°C/min, and measured up to 230°C. The temperature of the maximum peak of the obtained melting endothermic curve was defined as the melting temperature (Tm) .

Using the same differential scanning calorimeter, about 5 mg of indium (In) was held at 110°C for 2 minutes in a nitrogen gas atmosphere (nitrogen gas flow rate: 50 ml/min), heated at a temperature raising rate of 5°C/min, and measured up to 180°C. The maximum peak temperature of the obtained melting endothermic curve was defined as the melting temperature (Tm), and found to be 156.6°C.

### (4) Content of monomer unit derived from ethylene (unit: mass%)

The content was obtained by the IR spectrum measurement method described on page 256 of Polymer Analysis Handbook (1985, published by Asakura Publishing Co., Ltd.).

### (5) Content of monomer unit derived from α-olefin having 4 to 12 carbon atoms (unit: mass%)

The content was obtained by the IR spectrum measurement method described on page 619 of Polymer Analysis Handbook (1995, published by Kinokuniya Co., Ltd.).

### (6) Proportion (unit: mass%) of propylene-ethylene copolymer (A) and propylene-α-olefin copolymer (B)

The proportion was determined from the mass balance in each step during polymerization.

### (7) Melt flow rate (unit: g/10 min)

The MFRs of the propylene-based polymer and the propylene-based polymer material were measured under conditions of a temperature of 230°C and a load of 2.16 kg according to the method A defined in JIS K7210-1. The MFRs of the ethylene-based polymer and the α-olefin-based polymer were measured under conditions of a temperature of 190°C and a load of 2.16 kg according to the method A defined in JIS K7210-1.

### (8) Seal initiation temperature (unit: °C)

The surfaces of two films were superimposed on each other, and then pressure-bonded under conditions of a predetermined temperature and a load of 1 kg/cm² for 1 second using a heat sealer manufactured by Toyo Seiki Co., Ltd., to perform heat sealing. The heat-sealed sample was held in a state under conditions of a temperature of 23°C and a humidity of 50% for 24 hours. Then, a seal temperature at which a peeling resistance force when the sample was peeled off under conditions of a temperature of 23°C, a humidity of 50%, a peeling rate of 200 mm/min, and a peeling angle of 180 degrees was 300 g/15 mm was determined using a tensile tester, and defined as a seal initiation temperature.

### (9) Blocking strength (unit: N/12 cm²)

The surfaces of two films were superimposed on each other, a weight having an installation area of 40 mm × 30 mm and a weight of 500 g was placed thereon, and the sample was heat-treated in an oven at 60°C for 24 hours. The heat-treated sample was allowed to stand under conditions of a temperature of 23°C and a humidity of 50% for 30 minutes or more. Then, the shear peeling force was measured at a tensile speed of 200 mm/min using a tensile tester, and defined as a blocking strength.

### (10) Young's modulus (unit: MPa)

A test piece having a length of 120 mm (MD direction) and a width of 20 mm (TD direction) was sampled from the film. Using a tabletop tensile tester manufactured by A & D Company, Limited, the sampled test piece was measured under conditions of a chuck interval of 60 mm and a tensile speed of 5 mm/min, to create an S-S curve (stress-strain curve), and the initial elastic modulus (Young's modulus) was determined.

The components used in Examples and Comparative Examples are as follows.

### [Propylene-based polymer material (1)]

Using a Ziegler-Natta catalyst, propylene and ethylene were copolymerized in a liquid phase in the first step, and then, propylene and 1-butene were copolymerized in a gas phase in the second step to obtain a propylene-based multistage polymer composed of a propylene-ethylene copolymer (A-1) and a propylene-1-butene copolymer (B-1). The content of the monomer unit derived from ethylene in the propylene-ethylene copolymer (A-1) was 4 mass%, and the content of the monomer unit derived from 1-butene in the propylene-1-butene copolymer (B-1) was 25 mass%. In the obtained propylene-based multistage polymer, the content of the propylene-ethylene copolymer (A-1) was 19 mass%, and the content of the propylene-1-butene copolymer (B-1) was 81 mass%.

Hydrotalcite (0.01 parts by mass, manufactured by Kyowa Chemical Industry Co., Ltd.), 0.15 parts by mass of Irganox 1010 (manufactured by BASF SE), and 0.03 parts by mass of SUMILIZER GP (manufactured by Sumitomo Chemical Co., Ltd.) were mixed with 100 parts by mass of the obtained propylene-based multistage polymer, and then the mixture was melt-kneaded to obtain a propylene-based polymer material (1) having a melt flow rate of 7 g/10 min measured at 230°C. The melting point of the propylene-based polymer material (1) was 130.1°C.

### [Propylene-based polymer material (2)]

Using a Ziegler-Natta catalyst, propylene and ethylene were copolymerized in a liquid phase in the first step, and then propylene and ethylene were copolymerized in a gas phase in the second step to obtain a propylene-ethylene copolymer (A-2). The content of the monomer unit derived from ethylene in the propylene-ethylene copolymer (A-2) was 4 mass%. Calcium stearate (0.045 parts by mass, manufactured by Sakai Chemical Industry Co., Ltd.), 0.2 parts by mass of Irganox 1010 (manufactured by BASF SE), and 0.03 parts by mass of Irgafos 168 (manufactured by BASF SE) were mixed with 100 parts by mass of the obtained propylene-ethylene copolymer (A-2), followed by melt-kneading to obtain a propylene-based polymer material (2) having a melt flow rate of 3 g/10 min measured at 230°C.

The melting point of the propylene-based polymer material (2) was 142.0°C.

### [Ethylene-α-olefin copolymer (C-1)]

SUMIKATHENE E FV401 (trade name) (manufactured by Sumitomo Chemical Co., Ltd.) as an ethylene-1-hexene copolymer was used. The content of the monomer unit derived from ethylene in SUMIKATHENE E FV401 was 88 mass%. The melt flow rate measured at 190°C was 3.8 g/10 min, the density was 903 kg/m³, and the melting point was 112°C.

### [Ethylene-α-olefin copolymer (C-2)]

TAFMER A 4085s (trade name) (manufactured by Mitsui Chemicals, Inc.) as an ethylene-butene copolymer was used. The content of the monomer unit derived from ethylene in TAFMER A 4085s was 80 mass%. The melt flow rate measured at 190°C was 3.6 g/10 min, the density was 885 kg/m³, and no melting point was observed.

### [Butene homopolymer (C-3)]

TAFMER BL 4000 (trade name) (manufactured by Mitsui Chemicals, Inc.) as a butene homopolymer was used.

The melt flow rate measured at 190°C was 1.8 g/10 min, the density was 915 kg/m³, and the melting point was 112°C.

### [Ethylene-propylene copolymer (C-4)]

Vistamaxx 6102FL (trade name) (manufactured by ExxonMobil Japan G.K.) as an ethylene-propylene copolymer was used. The content of the monomer unit derived from ethylene in Vistamaxx 6102FL was 16 mass%. The melt flow rate measured at 190°C was 1.3 g/10 min, the density was 862 kg/m³, and no melting point was observed.

### [Ethylene homopolymer (D-1)]

G1801 (trade name) (manufactured by Keiyo Polyethylene Co., Ltd.) as an ethylene homopolymer was used. The melt flow rate measured at 190°C was 7 g/10 min, the density was 961 kg/m³, and the melting point was 130°C.

### [Anti-blocking agent masterbatch]

As an anti-blocking agent masterbatch, 10 mass% of SYLYSIA 550 (manufactured by Fuji Silysia Chemical Ltd.) described in Example 4 of JP-A-2003-170420 was used. Hereinafter, the anti-blocking agent masterbatch may be referred to as AB.

### [Example 1]

A composition was obtained by pellet-blending 78 mass% of a propylene-based polymer material (1), 20 mass% of an ethylene-α-olefin copolymer (C-1), and 2 mass% of an anti-blocking agent masterbatch. The compounding ratio of the composition is shown in Table 1. In the obtained composition, the elution amount measured at 70 to 95°C was 24 mass% based on 100 mass% of the elution amount measured up to 160°C by temperature gradient interaction chromatography, the amount of the cold xylene soluble component was 12.1 mass%, and the melting point was 133.1°C.

The obtained composition was melt-extruded at a resin temperature of 250°C using a 50 mm T-die film-forming apparatus (V-50-F600 type film molding apparatus, manufactured by Tanabe Plastics Co., Ltd., equipped with a 400 mm width T die), and then cooled and solidified while being wound with a chill roll through which cooling water at 40°C has passed to obtain a film having a thickness of 30 µm. The seal initiation temperature, the blocking strength, and the Young's modulus were measured using the obtained film. The measurement results are shown in Table 2.

### [Example 2]

A composition was obtained by pellet-blending 74 mass% of a propylene-based polymer material (1), 19 mass% of an ethylene-α-olefin copolymer (C-1), 5 mass% of an ethylene homopolymer (C-3), and 2 mass% of an anti-blocking agent masterbatch. The compounding ratio of the composition is shown in Table 1. In the obtained composition, the elution amount measured at 70 to 95°C was 23 mass% based on 100 mass% of the elution amount measured up to 160 °C by temperature gradient interaction chromatography, the amount of the cold xylene soluble component was 11.6 mass%, and the melting point was 136.4°C.

Using the obtained composition, a film having a thickness of 30 µm was obtained in the same manner as in Example 1. The seal initiation temperature, the blocking strength, and the Young's modulus were measured using the obtained film. The measurement results are shown in Table 2.

### [Example 3]

A composition was obtained by pellet-blending 78 mass% of a propylene-based polymer material (1), 20 mass% of a butene homopolymer (C-3), and 2 mass% of an anti-blocking agent masterbatch. The compounding ratio of the composition is shown in Table 1. In the obtained composition, the elution amount measured at 70 to 95°C was 25 mass% based on 100 mass% of the elution amount measured up to 160°C by temperature gradient interaction chromatography, the amount of the cold xylene soluble component was 11.6 mass%, and the melting point was 115.6°C.

Using the obtained composition, a film having a thickness of 30 µm was obtained in the same manner as in Example 1. The seal initiation temperature, the blocking strength, and the Young's modulus were measured using the obtained film. The measurement results are shown in Table 2.

### [Example 4]

A composition was obtained by pellet-blending 78 mass% of a propylene-based polymer material (1), 20 mass% of an ethylene-α-olefin copolymer (C-2), and 2 mass% of an anti-blocking agent masterbatch. The compounding ratio of the composition is shown in Table 1. In the obtained mixture, the elution amount measured at 70 to 95°C was 27 mass% based on 100 mass% of the elution amount measured up to 160°C by temperature gradient interaction chromatography, the amount of the cold xylene soluble component was 13.8 mass%, and the melting point was 132.2°C.

Using the obtained composition, a film having a thickness of 30 µm was obtained in the same manner as in Example 1. The seal initiation temperature, the blocking strength, and the Young's modulus were measured using the obtained film. The measurement results are shown in Table 2.

### [Comparative Example 1]

A composition was obtained by pellet-blending 98 mass% of a propylene-based polymer material (1) and 2 mass% of an anti-blocking agent masterbatch. The compounding ratio of the composition is shown in Table 1. In the obtained composition, the elution amount measured at 70 to 95°C was 30 mass% based on 100 mass% of the elution amount measured up to 160°C by temperature gradient interaction chromatography, the amount of the cold xylene soluble component was 14.1 mass%, and the melting point was 134.1°C.

Using the obtained composition, a film having a thickness of 30 µm was obtained in the same manner as in Example 1. The seal initiation temperature, the blocking strength, and the Young's modulus were measured using the obtained film. The measurement results are shown in Table 2.

### [Comparative Example 2]

A composition was obtained by pellet-blending 93 mass% of a propylene-based polymer material (1), 5 mass% of an ethylene homopolymer (D-1), and 2 mass% of an anti-blocking agent masterbatch. The compounding ratio of the composition is shown in Table 1. In the obtained composition, the elution amount measured at 70 to 95°C was 29 mass% based on 100 mass% of the elution amount measured up to 160°C by temperature gradient interaction chromatography, the amount of the cold xylene soluble component was 13.0 mass%, and the melting point was 128.3°C.

Using the obtained composition, a film having a thickness of 30 µm was obtained in the same manner as in Example 1. The seal initiation temperature, the blocking strength, and the Young's modulus were measured using the obtained film. The measurement results are shown in Table 2.

### [Comparative Example 3]

A composition was obtained by pellet-blending 78 mass% of a propylene-based polymer material (2), 20 mass% of an ethylene-α-olefin copolymer (C-2), and 2 mass% of an anti-blocking agent masterbatch. The compounding ratio of the composition is shown in Table 1. In the obtained composition, the elution amount measured at 70 to 95°C was 48 mass% based on 100 mass% of the elution amount measured up to 160°C by temperature gradient interaction chromatography, the amount of the cold xylene soluble component was 7.6 mass%, and the melting point was 139.9°C.

Using the obtained composition, a film having a thickness of 30 µm was obtained in the same manner as in Example 1. The seal initiation temperature, the blocking strength, and the Young's modulus were measured using the obtained film. The measurement results are shown in Table 2.

### [Comparative Example 4]

A composition was obtained by pellet-blending 78 mass% of a propylene-based polymer material (2), 20 mass% of an ethylene-α-olefin copolymer (C-1), and 2 mass% of an anti-blocking agent masterbatch. The compounding ratio of the composition is shown in Table 1. In the obtained composition, the elution amount measured at 70 to 95°C was 44 mass% based on 100 mass% of the elution amount measured up to 160°C by temperature gradient interaction chromatography, the amount of the cold xylene soluble component was 5.2 mass%, and the melting point was 140.3°C.

Using the obtained composition, a film having a thickness of 30 µm was obtained in the same manner as in Example 1. The seal initiation temperature, the blocking strength, and the Young's modulus were measured using the obtained film. The measurement results are shown in Table 2.

### [Comparative Example 5]

A composition was obtained by pellet-blending 78 mass% of a propylene-based polymer material (1), 20 mass% of an ethylene-propylene copolymer (C-4), and 2 mass% of an anti-blocking agent masterbatch. The compounding ratio of the composition is shown in Table 1. In the obtained composition, the elution amount measured at 70 to 95°C was 25 mass% based on 100 mass% of the elution amount measured up to 160°C by temperature gradient interaction chromatography, the amount of the cold xylene soluble component was 30.9 mass%, and the melting point was 132.2°C.

Using the obtained composition, a film having a thickness of 30 µm was obtained in the same manner as in Example 1. The seal initiation temperature, the blocking strength, and the Young's modulus were measured using the obtained film. The measurement results are shown in Table 2.

**[Table 1]**

| | A-1 (mass%) | A-2 (mass%) | B-1 (mass%) | C-1 (mass%) | C-2 (mass%) | C-3 (mass%) | C-4 (mass%) | D-1 (mass%) | AB (mass%) |
|---|---|---|---|---|---|---|---|---|---|
| Example 1 | 15 | - | 63 | 20 | - | - | - | - | 2 |
| Example 2 | 14 | - | 60 | 19 | - | - | - | 5 | 2 |
| Example 3 | 15 | - | 63 | - | - | 20 | - | - | 2 |
| Example 4 | 15 | - | 63 | - | 20 | - | - | - | 2 |
| Comparative Example 1 | 19 | - | 79 | - | - | - | - | - | 2 |
| Comparative Example 2 | 18 | - | 75 | - | - | - | - | 5 | 2 |
| Comparative Example 3 | - | 78 | - | - | 20 | - | - | - | 2 |
| Comparative Example 4 | - | 78 | - | 20 | - | - | - | - | 2 |
| Comparative Example 5 | 15 | - | 63 | - | - | - | 20 | - | 2 |

**[Table 2]**

| | Elution amount at 70 to 95°C (mass%) | Elution amount at 70 to 75°C (mass%) | Elution amount at 90 to 95°C (mass%) | Cold xylene soluble component amount (mass%) | Melting point (°C) | Seal initiation temperature (°C) | Blocking strength (N/12cm²) | Young's modulus in MD direction (MPa) |
|---|---|---|---|---|---|---|---|---|
| Example 1 | 24.0 | 6.0 | 5.4 | 12.1 | 133.1 | 114 | 10.9 | 440 |
| Example 2 | 23.0 | 5.9 | 5.0 | 11.6 | 136.4 | 114 | 7.2 | 460 |
| Example 3 | 25.0 | 6.1 | 5.8 | 11.6 | 115.6 | 107 | 6.5 | 420 |
| Example 4 | 27.0 | 6.1 | 7.6 | 13.8 | 132.2 | 105 | 11.7 | 400 |
| Comparative Example 1 | 30.0 | 8.1 | 6.5 | 14.1 | 134.1 | 119 | 5.7 | 510 |
| Comparative Example 2 | 29.0 | 7.9 | 6.0 | 13.0 | 128.3 | 120 | 5.5 | 580 |
| Comparative Example 3 | 48.0 | 2.3 | 21.8 | 7.6 | 139.9 | 136 | 6.8 | 520 |
| Comparative Example 4 | 44.0 | 2.2 | 19.6 | 5.2 | 140.3 | 135 | 3.9 | 580 |
| Comparative Example 5 | 25.0 | 6.3 | 5.6 | 30.9 | 132.2 | 112 | Scale over (21.2 or more) | 360 |

As can be seen from the results in Table 2, the olefin-based polymer compositions of Examples that satisfy all the constituent requirements of the present invention can form a film that can be heat-sealed at a relatively low temperature, and have good anti-blocking property in the film.

### INDUSTRIAL APPLICABILITY

According to the present invention, it is possible to provide an olefin-based polymer composition capable of forming a film that can be heat-sealed at a relatively low temperature and having good anti-blocking property in the film, and a film containing the olefin-based polymer composition.

## Claims

1. An olefin-based polymer composition comprising an olefin-based polymer and satisfying the following requirements (1) to (3):
requirement (1):
in temperature gradient interaction chromatography of the olefin-based polymer composition measured using a gel permeation chromatograph equipped with a graphite-packed column, an elution amount measured at 70°C to 95°C is 10.0 mass% to 28.0 mass% based on 100 mass% of an elution amount measured up to 160°C,
requirement (2):
an amount of a cold xylene soluble component is 20.0 mass% or less, and
requirement (3):
a melting point of the olefin-based polymer composition is 150°C or lower.

2. The olefin-based polymer composition according to claim 1, comprising at least two olefin-based polymers.

3. The olefin-based polymer composition according to claim 1 or 2, wherein in the requirement (1), an elution amount at 70°C to 75°C is 3.0 mass% to 7.0 mass%, and an elution amount at 90°C to 95°C is 2.0 mass% to 18.0 mass%.

4. The olefin-based polymer composition according to any one of claims 1 to 3, wherein in the requirement (3), the melting point is 110°C to 135°C.

5. The olefin-based polymer composition according to any one of claims 1 to 4, comprising:
a propylene-based polymer material (I) containing at least one propylene-based polymer and having a melting point higher than 120°C; and
an olefin-based polymer material (II) containing at least one olefin-based polymer and having a melting point of 120°C or lower.

6. The olefin-based polymer composition according to any one of claims 1 to 5, comprising:
a propylene-ethylene copolymer (A) containing a monomer unit derived from propylene and a monomer unit derived from ethylene;
a propylene-α-olefin copolymer (B) containing a monomer unit derived from propylene and a monomer unit derived from an α-olefin having 4 to 12 carbon atoms; and
at least one polymer (C) selected from the group consisting of an ethylene-α-olefin copolymer containing a monomer unit derived from ethylene and a monomer unit derived from an α-olefin having 4 to 12 carbon atoms, and an α-olefin-based polymer containing 50 mass% or more of a monomer unit derived from an α-olefin having 4 to 12 carbon atoms.

7. The olefin-based polymer composition according to claim 6, wherein the propylene-α-olefin copolymer (B) contains 3 mass% to 30 mass% of a monomer unit derived from 1-butene.

8. The olefin-based polymer composition according to claim 6 or 7, wherein the polymer (C) is an ethylene-α-olefin copolymer containing a monomer unit derived from ethylene and a monomer unit derived from an α-olefin having 4 to 6 carbon atoms.

9. The olefin-based polymer composition according to claim 6 or 7, wherein the polymer (C) is an α-olefin homopolymer having 4 to 6 carbon atoms.

10. The olefin-based polymer composition according to any one of claims 6 to 9, further comprising an ethylene-based polymer (D) containing a monomer unit derived from ethylene and having a density of 940 kg/m³ to 970 kg/m³.

11. A film comprising the olefin-based polymer composition according to any one of claims 1 to 10.

12. The film according to claim 11, wherein a Young's modulus of the film in MD direction is 400 MPa to 500 MPa.
